# EUROPÄISCHE PATENTSCHRIFT

(11) **EP 2 739 501 B1**
(45) Veröffentlichungstag und Bekanntmachung des Hinweises auf die Patenterteilung: **01.07.2020**
(21) Anmeldenummer: 11773223.0
(22) Anmeldetag: 12.10.2011
(51) Int. Cl.: B60L 53/38

(54) **LADESTATION**
CHARGING STATION
POSTE DE CHARGE

(43) Veröffentlichungstag der Anmeldung: 11.06.2014
(73) Patentinhaber: Valeo Siemens eAutomotive Germany GmbH, 91056 Erlangen (DE)
(72) Erfinder: KEPKA, Alexander, 90427 Nürnberg (DE)
(74) Vertreter: Dr. Gassner & Partner mbB
(86) Internationale Anmeldenummer: PCT/EP2011/067798
(87) Internationale Veröffentlichungsnummer: WO 2013/053389

(56) Entgegenhaltungen:
- DE-A1-102011 108 543
- FR-A1- 2 740 921
- GB-A- 2 185 866

## Beschreibung

Die Erfindung bezieht sich auf eine Ladestation zum induktiven Laden eines Elektrofahrzeugs.

Die französische Offenlegungsschrift FR 2 740 921 A1 offenbart eine Ladestation mit einer Primärspule, die auf einem Bolzen befestigt ist und um die Bolzenachse des Bolzens drehbar ist. Der Bolzen ist in einer Nut verschieblich. Die Nut ist in einer Trägerplatte ausgebildet, die mittels dreier Arme über dem Boden gehalten wird. Fährt ein Fahrzeug in den Bereich der Ladestation ein, so wird die Primärspule um die Bolzenachse des Bolzens gedreht und ggf. entlang der Nut verschoben.

Eine andere Ladestation ist aus der britischen Offenlegungsschrift GB 2 185 866 A bekannt.

Der Erfindung liegt die Aufgabe zugrunde, eine Ladestation anzugeben, bei der eine Positionierung der Primärspule der Ladestation relativ zur Sekundärspule des zu ladenden Elektrofahrzeugs auch bei nicht mittigem Einfahren des Elektrofahrzeugs/erreichbar ist.

Diese Aufgabe wird erfindungsgemäß durch eine Ladestation mit den Merkmalen gemäß Patentanspruch 1 gelöst. Vorteilhafte Ausgestaltungen der erfindungsgemäßen Ladestation sind in Unteransprüchen angegeben.

Ein wesentlicher Vorteil der erfindungsgemäßen Ladestation ist darin zu sehen, dass bei dieser eine selbsttätige bzw. automatische Justage der Primärspule der Ladestation relativ zur Sekundärspule des Elektrofahrzeugs beim Einfahren des Elektrofahrzeugs erfolgen kann, da nämlich die Primärspule der Ladestation erfindungsgemäß beweglich befestigt ist. Dies ermöglicht es dem Elektrofahrzeug, beim Einfahren in den Bereich der Ladestation die Primärspule zu bewegen bzw. zu verfahren und damit relativ zu der Sekundärspule des Elektrofahrzeugs optimal zu positionieren bzw. auszurichten. Es ist also im Rahmen der Beweglichkeit der Primärspule möglich, die optimale Position der Primärspule einzustellen und somit eine optimale Energieübertragung von der Ladestation in Richtung Elektrofahrzeug hervorzurufen. Durch das erfindungsgemäße Schwenken der Schiene ist es in sehr einfacher Weise möglich, eine optimale Position der Primärspule relativ zur Sekundärspule und damit eine optimale Energieübertragung zwischen den beiden Spulen zu erreichen. Durch das Verschwenken der Schiene kann eine seitliche Toleranz der Position des Elektrofahrzeugs innerhalb des Bereichs der Ladestation ausgeglichen werden: Beispielsweise kann eine optimale Justage der Primärspule relativ zur Sekundärspule auch dann noch erfolgen, wenn das Elektrofahrzeug nicht exakt mittig - bezogen auf die Position der Primärspule - in den Bereich der Ladestation einfährt. Durch das Verschieben der Primärspule in der Schiene kann dem Umstand Rechnung getragen werden, dass das Elektrofahrzeug beim Anhalten im Bereich der Ladestation stets eine gewisse Parktoleranz aufweisen wird, die sich durch ein Verschieben der Primärspule entlang der Schienenlängsrichtung kompensieren lässt.

Als vorteilhaft wird es angesehen, wenn die bewegliche Primärspule auf der Schiene federnd befestigt ist und von dem Elektrofahrzeug beim Einfahren in den Bereich der Primärspule nach unten gedrückt werden kann. Durch eine Feder lassen sich Höhenunterschiede der Elektrofahrzeuge, die auf Bauartunterschieden oder auf Schwankungen in der Reifengröße oder im Reifendruck usw. beruhen können, in sehr einfacher Weise ausgleichen, so dass eine optimale vertikale Positionierung der Primärspule zur Sekundärspule möglich ist.

Eine federnde Befestigung der Primärspule lässt sich in besonders vorteilhafter Weise erreichen, wenn zwischen der Schiene und der Primärspule eine Teleskopeinrichtung angeordnet ist, die die Primärspule federnd nach oben drückt und ein Nachuntendrücken durch das Elektrofahrzeug erlaubt.

Um zu erreichen, dass die Primärspule im Ausgangszustand, d.h. vor dem Einfahren eines Elektrofahrzeugs und vor dem Beginn eines Ladevorgangs, stets eine vorgegebene Ausgangsposition einnimmt, wird es als vorteilhaft angesehen, wenn die Primärspule federnd gehalten wird und ohne äußere Krafteinwirkung eine vorgegebene Ausgangsposition einnimmt. Vorzugsweise sind auch die Trägerteile, die die Spule halten (z. B. Träger, Schienen, verschwenkbare Schienen, uws.) selbst derart federbelastet, dass sie ohne äußere Krafteinwirkung eine ihnen vorgegebene definierte Ausgangsposition einnehmen.

Die Erfindung bezieht sich darüber hinaus auf ein induktiv aufladbares Elektrofahrzeug, das mit einer Ladestation, wie sie oben beschrieben worden ist, aufladbar ist. Erfindungsgemäß ist bezüglich eines solchen Elektrofahrzeugs vorgesehen, dass das Elektrofahrzeug eine Sekundärspule und eine Positioniereinrichtung aufweist, die zum Positionieren einer beweglichen Primärspule einer Ladeeinrichtung relativ zur Sekundärspule des Elektrofahrzeugs geeignet ist.

Die Erfindung bezieht sich darüber hinaus auf eine Anordnung mit einer Ladestation, wie sie oben beschrieben worden ist, und einem Elektrofahrzeug, wie es oben beschrieben worden ist.

Darüber hinaus bezieht sich die Erfindung auf ein Verfahren zum Betreiben einer Ladestation zum Aufladen eines Elektrofahrzeugs. Erfindungsgemäß ist bezüglich eines solchen Verfahrens vorgesehen, dass beim Einfahren des Elektrofahrzeugs in den Bereich der Ladestation mit einer am Fahrzeugboden des Elektrofahrzeugs angeordneten Positioniereinrichtung die auf einer Schiene verschiebbare Primärspule entlang der Fahrtrichtung verschoben wird und die Schiene um eine Schwenkachse der Schiene verschwenkt wird.

Bezüglich der Vorteile des erfindungsgemäßen Verfahrens sei auf die obigen Ausführungen im Zusammenhang mit der erfindungsgemäßen Ladestation verwiesen, da die Vorteile der erfindungsgemäßen Ladestation denen des erfindungsgemäßen Verfahrens im Wesentlichen entsprechen.

Zusätzlich oder alternativ kann vorgesehen sein, dass mit einer am Fahrzeugboden angeordneten Positioniereinrichtung die mit einer Teleskop- oder Federeinrichtung in Verbindung stehende Primärspule nach unten Richtung Boden gedrückt wird.

Die Erfindung wird nachfolgend anhand von Ausführungsbeispielen näher erläutert; dabei zeigen beispielhaft:
- Figur 1: ein erstes Ausführungsbeispiel für eine erfindungsgemäße Ladestation in einer Sicht von der Seite,
- Figur 2: die Ladestation gemäß Figur 1 in einer Sicht von oben,
- Figur 3: ein Ausführungsbeispiel für eine Schiene der Ladestation gemäß den Figuren 1 und 2 im Querschnitt,
- Figur 4: die Schiene gemäß Figur 3, nachdem ein eine Primärspule der Ladestation tragendes Trägerelement in die Schiene eingesetzt worden ist,
- Figur 5: ein zweites Ausführungsbeispiel für eine erfindungsgemäße Ladestation, bei der die Spule auf einer schwenkbar gelagerten Schiene verschieblich befestigt ist,
- Figur 6: ein drittes Ausführungsbeispiel für eine erfindungsgemäße Ladestation, bei der die Spule entlang der Längsrichtung einer Schiene verschieblich sowie in vertikaler Richtung federnd gelagert ist,
- Figur 7: beispielhaft ein Elektrofahrzeug, das in den Bereich einer Ladestation gemäß Figur 5 einfährt,
- Figur 8: das Elektrofahrzeug gemäß Figur 7 in einer Sicht von oben,
- Figur 9: das Elektrofahrzeug gemäß den Figuren 7 und 8, nachdem es eine Position oberhalb der Ladestation eingenommen hat,
- Figur 10: das Justieren der Primärspule der Ladestation oberhalb der Sekundärspule des Elektrofahrzeugs in einer Sicht von der Seite und
- Figur 11: die unterhalb der Sekundärspule des Elektrofahrzeugs ausgerichtete Primärspule der Ladestation.

In den Figuren werden der Übersicht halber für identische oder vergleichbare Komponenten stets dieselben Bezugszeichen verwendet.

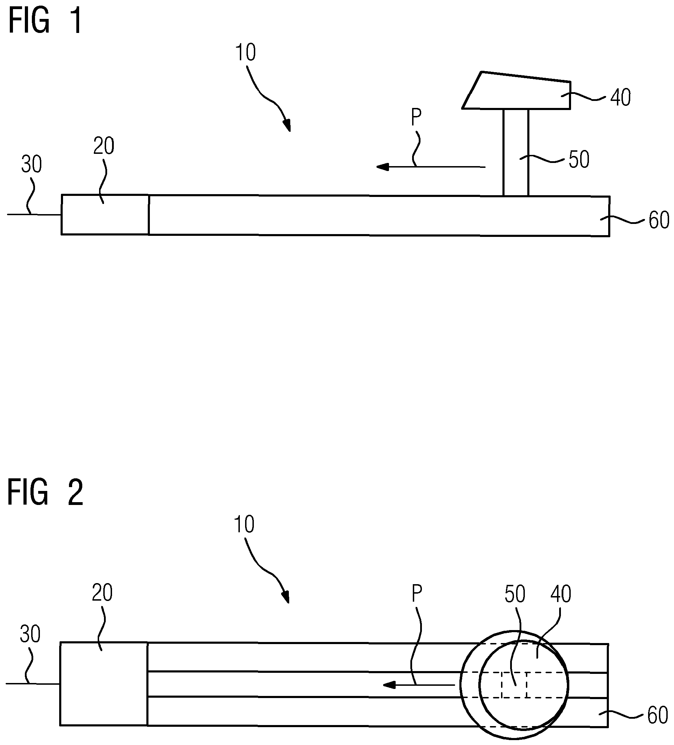

In der Figur 1 sieht man eine Ladestation 10, die mit einer Steuereinrichtung 20 ausgestattet ist. Die Steuereinrichtung 20 ist über einen Anschluss 30 an ein nicht weiter dargestelltes Energieverteilnetz angeschlossen. Die Aufgabe der Steuereinrichtung 20 besteht darin, den Ladevorgang zum induktiven Laden eines in der Figur 1 nicht dargestellten Elektrofahrzeugs zu steuern, zu überwachen und ggf. zu schützen.

Wie sich in der Figur 1 erkennen lässt, weist die Ladestation 10 eine Primärspule 40 auf, die über nicht weiter dargestellte elektrische Leitungen mit der Steuereinrichtung 20 in Verbindung steht und über diese mit Energie gespeist wird, die über die Primärspule 40 induktiv zum Elektrofahrzeug übertragen wird.

Die Primärspule 40 ist auf einem Trägerelement 50 befestigt, das in einer Schiene 60 verschieblich geführt ist. Durch die Anbringung der Primärspule 40 an dem verschieblichen Trägerelement 50 ist es möglich, die Primärspule 40 zwecks Justage relativ zur Sekundärspule eines Elektrofahrzeugs entlang der Pfeilrichtung P zu verschieben.

Die Figur 2 zeigt die Ladestation 10 gemäß Figur 1 in einer Sicht von oben. Man erkennt die Primärspule 40 sowie das Trägerelement 50, das in der Schiene 60 verschieblich geführt ist. Bei dem Ausführungsbeispiel gemäß Figur 2 ist es somit möglich, die Primärspule 40 entlang der Pfeilrichtung P in Richtung auf die Steuereinrichtung 20 zu verschieben.

Die Anordnung der Steuereinrichtung 20 ist bei dem Ausführungsbeispiel gemäß den Figuren 1 und 2 nur beispielhaft zu verstehen. Die Steuereinrichtung 20 kann an dem in der Figur 2 linken Ende der Schiene 60 oder auch am rechten Ende der Schiene 60 oder auch völlig losgelöst von der Schiene 60 angeordnet sein.

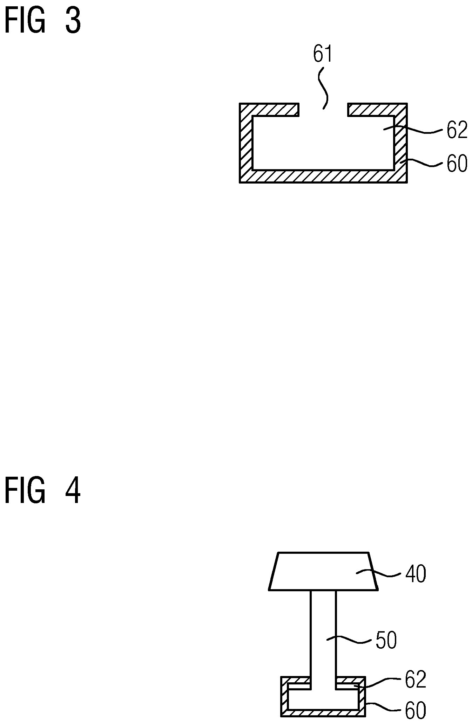

Die Figur 3 zeigt die Schiene 60 der Ladestation 10 gemäß den Figuren 1 und 2 beispielhaft näher im Detail. Es lässt sich erkennen, dass die Schiene 60 einen oberen Öffnungsschlitz 61 aufweist, durch den das Trägerelement 50 in den Innenbereich 62 der Schiene 60 eingreifen kann.

Bei dem Ausführungsbeispiel gemäß Figur 3 ist der Innenbereich 62 der Schiene 60 im Querschnitt näherungsweise rechteckig; dies ist jedoch nur beispielhaft zu verstehen. Alternativ kann der Innenbereich 62 im Querschnitt auch anders geformt sein, beispielsweise quadratisch, rund, oval oder vieleckig.

Die Figur 4 zeigt die Schiene 60 gemäß Figur 3, nachdem das Trägerelement 50 in den Innenbereich 62 eingesteckt worden ist. Es ist somit möglich, das Trägerelement 50 mit der darauf befindlichen Primärspule 40 entlang der Längsrichtung der Schiene 60 zu verschieben; die Längsrichtung der Schiene 60 erstreckt sich bei der Darstellung gemäß Figur 4 senkrecht zur Bildebene, also in die Bildebene hinein bzw. aus der Bildebene heraus.

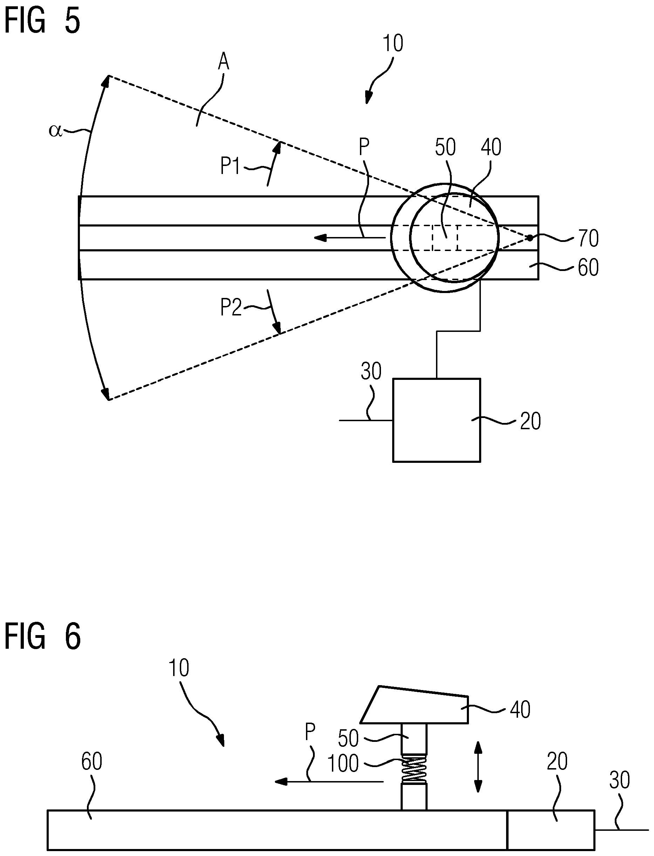

Die Figur 5 zeigt ein zweites Ausführungsbeispiel für eine Ladestation 10. Bei diesem Ausführungsbeispiel ist die Primärspule 40 ebenfalls auf einer Schiene 60 verschieblich gelagert. Hierzu ist die Primärspule 40 - wie auch bei dem Ausführungsbeispiel gemäß den Figuren 1 bis 4 - auf einem Trägerelement 50 befestigt, das in der Schiene 60 verschieblich geführt ist.

Zusätzlich ist bei dem Ausführungsbeispiel gemäß Figur 5 vorgesehen, dass die Schiene 60 verschwenkbar gelagert ist. Hierzu ist eine Schwenkachse 70 vorgesehen, die die Schiene 60 hält und ein Verschwenken der Schiene 60 entlang den Pfeilen P1 und P2 ermöglicht.

Bei einem Einfahren eines Elektrofahrzeugs in den Bereich der Ladestation 10 ist es somit möglich, die Primärspule 40 nicht nur translatorisch entlang der Pfeilrichtung P zu verschieben, sondern darüber hinaus auch senkrecht zu der Pfeilrichtung P. Es ist bei dem Ausführungsbeispiel gemäß Figur 5 also möglich, die Primärspule 40 innerhalb des Kreissegments A zu positionieren, dessen Größe durch den maximalen Schwenkwinkel α der Schiene 60 definiert ist.

Um zu vermeiden, dass die Steuereinrichtung 20 bei einem Verschwenken der Schiene 60 mitbewegt wird, wird diese vorzugsweise ortsfest neben der Schiene 60 montiert, wie dies in der Figur 5 beispielhaft gezeigt ist.

Die Figur 6 zeigt ein Ausführungsbeispiel für eine Ladestation 10, bei der die Primärspule 40 über ein verschiebliches Trägerelement 50 auf einer schwenkbar gehaltenen Schiene 60 befestigt ist, wie sie im Zusammenhang mit dem Ausführungsbeispiel gemäß der Figur 5 erläutert worden ist.

Um zusätzlich auch eine Justage der Primärspule 40 in vertikaler Richtung zu erreichen, weist die Ladestation 10 gemäß Figur 6 zusätzlich eine Feder- oder Teleskopeinrichtung 100 auf, die die Spule 40 federnd relativ zur Schiene 60 hält. Es ist somit möglich, die Primärspule 40 senkrecht nach unten zu drücken, wenn dies für eine Kopplung mit einer Sekundärspule eines Elektrofahrzeugs erforderlich ist.

Die Feder- oder Teleskopeinrichtung 100 ist vorzugsweise derart ausgestaltet, dass sie eine Vorspannung auf die Primärspule 40 derart ausübt, dass diese ohne größere Krafteinwirkung eine vorgegebene Höhe oberhalb der Schiene 60 einnimmt.

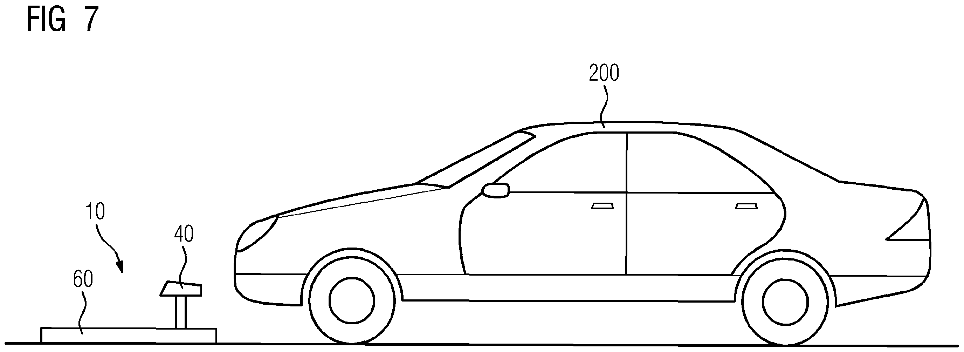

Die Figur 7 zeigt beispielhaft die Positionierung der Primärspule 40 der Ladestation 10 gemäß Figur 5, wenn ein Elektrofahrzeug 200 in den Bereich der Ladestation 10 einfährt. Die Figur 7 zeigt dabei die Situation vor einem Einfahren des Elektrofahrzeugs in einer Sicht von der Seite.

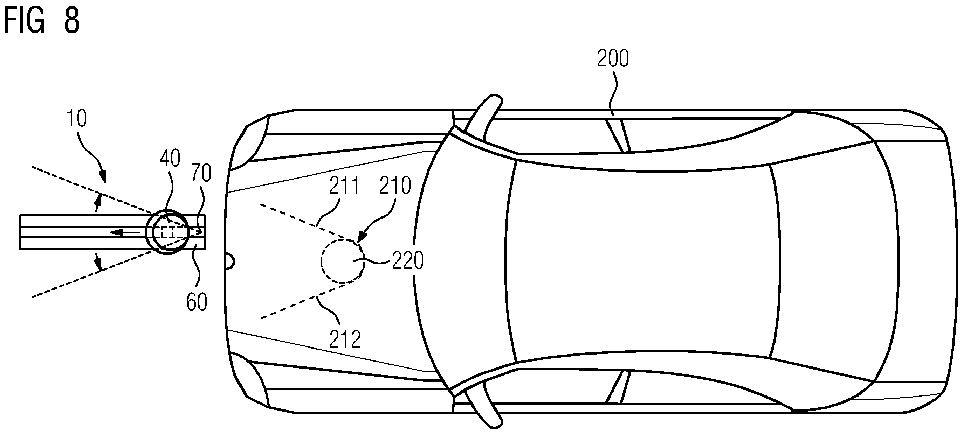

Die Figur 8 zeigt das Elektrofahrzeug 200 sowie die Ladestation 10 gemäß Figur 7 in einer Sicht von oben. Es lässt sich erkennen, dass die Primärspule 40 der Ladestation 10 verschieblich auf der Schiene 60 befestigt ist, wobei die Schiene 60 um die Schwenkachse 70 verschwenkbar ist.

Darüber hinaus lässt sich in der Figur 8 eine Positioniereinrichtung 210 erkennen, die zwei zueinander beabstandete und - in Fahrtrichtung des Elektrofahrzeugs gesehen - nach hinten zusammenlaufende Seitenwände 211 und 212 umfasst. Im hinteren Ende der Positioniereinrichtung 210 befindet sich eine Sekundärspule 220 des Elektrofahrzeugs 200, in die von der Primärspule 40 der Ladestation 10 Energie eingekoppelt werden kann, um das Elektrofahrzeug mit elektrischer Energie aufzuladen.

Die Positioniereinrichtung 210 kann beispielsweise durch eine einteilige Fangschale (zum Beispiel aus Kunststoff, beispielsweise faserverstärktem Kunststoff) gebildet sein, deren Schalenseitenwände die Seitenwände 211 und 212 der Positioniereinrichtung bilden.

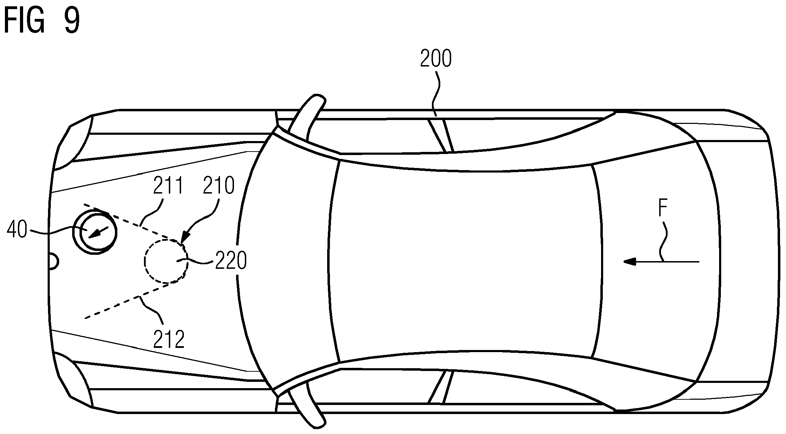

In der Figur 9 ist das Elektrofahrzeug gemäß den Figuren 7 und 8 dargestellt, nachdem es über die Primärspule 40 der Ladestation 10 gefahren ist. Es lässt sich erkennen, dass die Primärspule 40 von der in der Figur 9 oberen Seitenwand 211 der Positioniereinrichtung 210 eingefangen wird und von dieser in der Figur 9 nach unten - bzw. in Fahrtrichtung F gesehen nach links - gedrückt wird. Fährt das Elektrofahrzeug 200 entlang der Fahrtrichtung F weiter nach vorn, so wird die Primärspule 40 aufgrund der Einwirkung der in der Figur 9 oberen Seitenwand 211 in Richtung auf die Sekundärspule 220 gedrückt, so dass eine optimale Ausrichtung zwischen der Primärspule 40 der Ladestation 10 und der Sekundärspule 220 des Elektrofahrzeugs 200 erreicht wird.

Bei der in der Figur 9 dargestellten Einfahrsituation wirkt zum Positionieren bzw. Ausrichten der Primärspule 40 ausschließlich die Seitenwand 211 der Positioniereinrichtung 210 mit. Alternativ kann bei einer anderen Einfahrsituation die in der Figur 9 untere Seitenwand 212 der Positioniereinrichtung 210 für eine optimale Positionierung der Primärspule 40 sorgen.

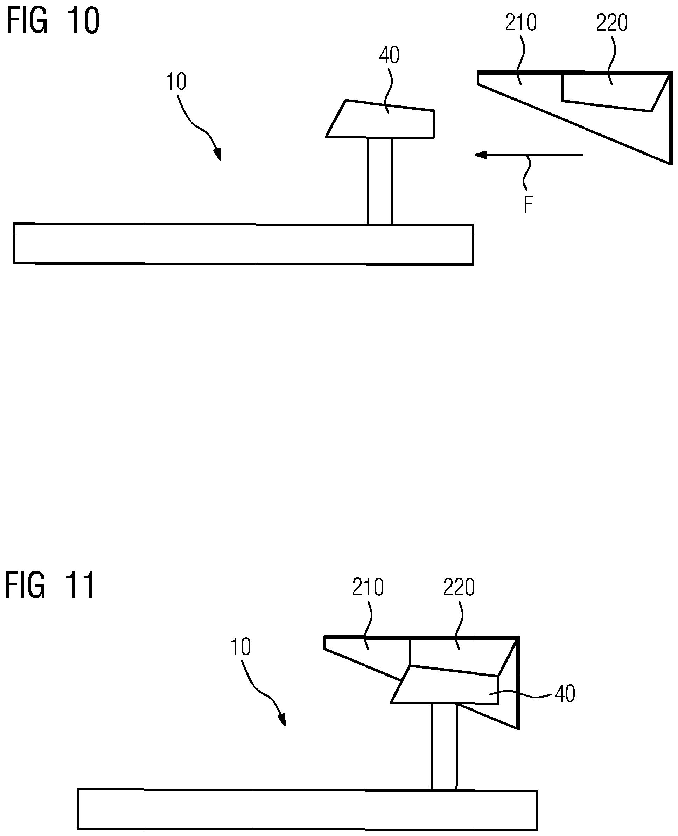

Das Einfahren des Elektrofahrzeugs 200 in den Bereich der Ladestation 10 ist in einer schematischen Darstellung nochmals in einer seitlichen Sicht in den Figuren 10 und 11 gezeigt. Die Figur 10 zeigt die als einteilige Fangschale ausgebildete Positioniereinrichtung 210 des Elektrofahrzeugs mit der darin befindlichen Sekundärspule 220, die in Fahrtrichtung F des Elektrofahrzeugs auf die Ladestation 10 zubewegt wird.

In der Figur 11 ist der Zustand dargestellt, nachdem aufgrund der Einwirkung der Positioniereinrichtung 210 die Primärspule 40 der Ladestation 10 in eine optimale Position relativ zur Sekundärspule 220 gebracht worden ist. Es lässt sich erkennen, dass sich die Primärspule 40 unmittelbar unter der Sekundärspule 220 befindet, so dass eine optimale induktive Energieübertragung von der Primärspule 40 zur Sekundärspule 220 möglich ist.

## Patentansprüche

1. Ladestation (10) zum induktiven Laden eines Elektrofahrzeugs (200),
- wobei die Ladestation (10) eine bewegliche Primärspule (40) aufweist, die zum Laden des Elektrofahrzeugs (200) ein Magnetfeld erzeugen kann, und
- wobei die Primärspule (40) derart beweglich befestigt ist, dass sie von dem Elektrofahrzeug (200) - beim Einfahren in den Bereich der Ladestation (10) - bewegt und relativ zu einer Sekundärspule (220) des Elektrofahrzeugs (200) positioniert werden kann,
**dadurch gekennzeichnet, dass**
die bewegliche Primärspule (40) auf einer Schiene (60) befestigt ist, die um eine Schwenkachse (70) schwenkbar ist, ein Verschieben der Primärspule (40) in Schienenlängsrichtung erlaubt und beim Einfahren des Elektrofahrzeugs (200) in den Bereich der Primärspule (40) von dem Elektrofahrzeug (200) um die Schwenkachse (70) verschwenkt werden kann.

2. Ladestation (10) nach Anspruch 1,
**dadurch gekennzeichnet, dass**
die bewegliche Primärspule (40) auf der Schiene (60) federnd befestigt ist und von dem Elektrofahrzeug (200) beim Einfahren in den Bereich der Primärspule (40) nach unten gedrückt werden kann.

3. Ladestation (10) nach Anspruch 2,
**dadurch gekennzeichnet, dass**
zwischen der Schiene (60) und der Primärspule (40) eine Teleskopeinrichtung (100) angeordnet ist, die die Primärspule (40) federnd nach oben drückt und ein Nachuntendrücken durch das Elektrofahrzeug (200) erlaubt.

4. Ladestation (10) nach einem der voranstehenden Ansprüche,
**dadurch gekennzeichnet, dass**
die Primärspule (40) federnd gehalten wird und ohne äußere Krafteinwirkung eine vorgegebene Ausgangsposition einnimmt.

5. Verfahren zum Betreiben einer Ladestation (10) zum Aufladen eines Elektrofahrzeugs (200),
wobei beim Einfahren des Elektrofahrzeugs (200) in den Bereich der Ladestation (10) eine bewegliche Primärspule (40) der Ladestation (10) von einer am Fahrzeugboden des Elektrofahrzeugs (200) angeordneten Positioniereinrichtung (210) relativ zu der Sekundärspule (220) des Elektrofahrzeugs (200) positioniert wird,
**dadurch gekennzeichnet, dass**
beim Einfahren des Elektrofahrzeugs (200) in den Bereich der Ladestation (10) von der am Fahrzeugboden des Elektrofahrzeugs (200) angeordneten Positioniereinrichtung (210) die auf einer Schiene (60) verschiebbare Primärspule (40) entlang der Fahrtrichtung verschoben und die Schiene (60) um eine Schwenkachse (70) der Schiene (60) verschwenkt wird.

## Claims

1. A charging station (10) for inductively charging an electric vehicle (200),
- wherein the charging station (10) comprises a movable primary coil (40) capable of generating a magnetic field for charging the electric vehicle (200), and
- wherein the primary coil (40) is movably mounted such that it can be moved by the electric vehicle (200) when entering the area of the charging station (10) and positioned relative to a secondary coil (220) of the electric vehicle (200),
**characterized in that**
the movable primary coil (40) is mounted on a rail (60), which is pivotable about a swivel axis (70), allows displacement of the primary coil (40) in the longitudinal direction of the rail and is able to be swiveled about the swivel axis (70) by the electric vehicle (200) when the electric vehicle (200) drives into the area of the primary coil (40).

2. The charging station (10) according to claim 1,
**characterized in that**
the movable primary coil (40) is resiliently mounted on the rail (60) and can be pushed downwards by the electric vehicle (200) when driving into the area of the primary coil (40).

3. The charging station (10) according to claim 2,
**characterized in that**
a telescopic device (100) is arranged between the rail (60) and the primary coil (40), the device resiliently pushing the primary coil (40) upwards and allowing to be pushed downwards by the electric vehicle (200).

4. The charging station (10) according to one of the preceding claims,
**characterized in that**
the primary coil (40) is resiliently supported, occupying a predetermined starting position without external force.

5. A method for operating a charging station (10) for charging an electric vehicle (200), wherein, when the electric vehicle (200) drives into the region of the charging station (10), a movable primary coil (40) of the charging station (10) is positioned relative to the secondary coil (220) of the electric vehicle (200) by a positioning device (210) arranged on the vehicle floor of the electric vehicle (200), **characterized in that**
when the electric vehicle (200) drives into the area of the charging station (10), the primary coil (40) displaceable on a rail (60) is displaced along the direction of travel by the positioning device (210) arranged on the vehicle floor of the electric vehicle (200), and the rail (60) is swiveled about a swivel axis (70) of the rail (60).

## Revendications

1. Station de charge (10) permettant de charger par induction un véhicule électrique (200),
- en ce que la station de charge (10) présente une bobine primaire (40) mobile cappable de générer un champ magnétique pour charger le véhicule électrique (200), et
- en ce que la bobine primaire (40) est fixée de manière mobile afin de pouvoir être déplacée par le véhicule électrique (200) lorsqu'il pénètre dans la zone de la station de charge (10), et positionnée par rapport à une bobine secondaire (220) dudit véhicule électrique (200),
**caractérisée en ce que**
la bobine primaire (40) mobile est fixée sur un rail (60) qui est pivotant autour d'un axe de pivotement (70), ledit rail permet un déplacement de la bobine primaire (40) dans le sens de la longueur du rail et lorsque le véhicule électrique (200) pénètre dans la zone de la bobine primaire (40) peut être pivoté autour de l'axe de pivotement (70) par le véhicule électrique (200).

2. Station de charge (10) selon la revendication 1, **caractérisée en ce que** la bobine primaire (40) mobile est fixée élastiquement sur le rail (60) et peut être poussée vers le bas par le véhicule électrique (200) lorsqu'il pénètre dans la zone de la bobine primaire (40).

3. Station de charge (10) selon la revendication 2, **caractérisée en ce qu'**un dispositif télescopique (100) est disposé entre le rail (60) et la bobine primaire (40), ledit dispositif télescopique poussant élastiquement vers le haut la bobine primaire (40) et permettant une pression vers le bas par le véhicule électrique (200).

4. Station de charge (10) selon l'une des revendications précédentes, **caractérisée en ce que** la bobine primaire (40) est retenue élastiquement et prend une position de sortie prédéfinie sans l'action d'une force extérieure.

5. Procédé de fonctionnement d'une station de charge (10) permettant le chargement d'un véhicule électrique (200), en ce que lorsque le véhicule électrique (200) pénètre dans la zone de la station de charge (10) une bobine primaire (40) mobile de la station de charge (10) est positionnée par rapport à la bobine secondaire (220) du véhicule électrique (200) par un dispositif de positionnement (210) disposé sur le plancher de véhicule du véhicule électrique (200),
**caractérisé en ce que**
lorsque le véhicule électrique (200) pénètre dans la zone de la station de charge (10) la bobine primaire (40) déplaçable sur un rail (60) est déplacée dans le sens de la marche par le dispositif de positionnement (210) disposé sur le plancher de véhicule du véhicule électrique (200) et le rail (60) est pivoté autour d'un axe de pivotement (70) du rail (60).
